Europäisches Patentamt

European Patent Office

Office européen des brevets

(11) Publication number: **0 426 909 A1**

# EUROPEAN PATENT APPLICATION

(21) Application number: 89311442.1

(22) Date of filing: 06.11.89

(51) Int. Cl.⁵: **G06F 9/44, G06F 9/445**

(43) Date of publication of application:
**15.05.91 Bulletin 91/20**

(84) Designated Contracting States:
**AT BE CH DE ES FR GB GR IT LI LU NL SE**

(71) Applicant: **HEIKKI MARTTILA OY**
**Vasarakatu 24**
**SF-40320 Jyväskylä(FI)**

(72) Inventor: **Laaksonen, Osmo**
**Jukanrinne**
**SF-40220 Keski-Pakola(FI)**

(74) Representative: **Pendlebury, Anthony et al**
**PAGE, WHITE & FARRER 54 Doughty Street**
**London WC1N 2LS(GB)**

(54) A method of loading and/or replacing files in a computer software.

(57) The invention relates to a method of loading and/or replacing files in a computer software. Previously it has not been possible to flexibly modify the user interface of the software to meet the requirements of different users. The method of the invention is characterized in that the files are called from under the of control of the used software or when loading the program in a manner known per se so that the loaded file replaces or completes at least part of the user interface used by the software.

FIG. 1

FIG. 2

EP 0 426 909 A1

# A METHOD OF LOADING AND/OR REPLACING FILES IN A COMPUTER SOFTWARE

This invention relates to a method of loading and/or replacing at least one file in a computer software.

In most cases, original computer softwares are supplied as unilingual versions throughout the world, while local importers or dealers perform the required conversions to national languages. In principle, this is carried out by examining the different files of the software and by writing the converted, national-language text version on the original, foreign-language text.

One problem is that the original program text is destroyed, whereby the language used in the program is determined on loading the program, and cannot be changed without interrupting the work, terminating the program and restarting another program version. On the other hand, when a new program version is published, the whole procedure has to be performed again because the texts and their locations vary in different versions and the converted text in the files of the old program version cannot be used by conventional methods.

In a broader sense, the above also applies to user interfaces, menu structures, graphic specification files and error messages and other communications of softwares and operating systems. In the present application hereinbelow, the software parts intended for the interaction between the user and the computer will be referred to by the common name "user interface".

The object of the present invention is to eliminate the above drawbacks and to provide a method by means of which the menus, commands, messages and other communications contained in a computer software can be converted directly to another language or to another format without any need of the program being designed for the purpose and without interfering with the use of the program. It is to be noted that some prior art softwares comprise logic interfaces for external program modules; however, instead of changing the software itself, previously available add-in products only add an additional function to the software.

The invention according to the invention is characterized in that the files are called from under the control of the used software or when loading it in a manner known per se so that the loaded file replaces or completes at least part of the user interface used by the software.

The other preferred embodiments of the invention are characterized by the features disclosed in the attached claims.

In the following the invention will be described in greater detail by means of examples with reference to the attached drawings, wherein

Figure 1 shows one embodiment of the method of the invention;

Figure 2 shows another embodiment of the method of the invention.

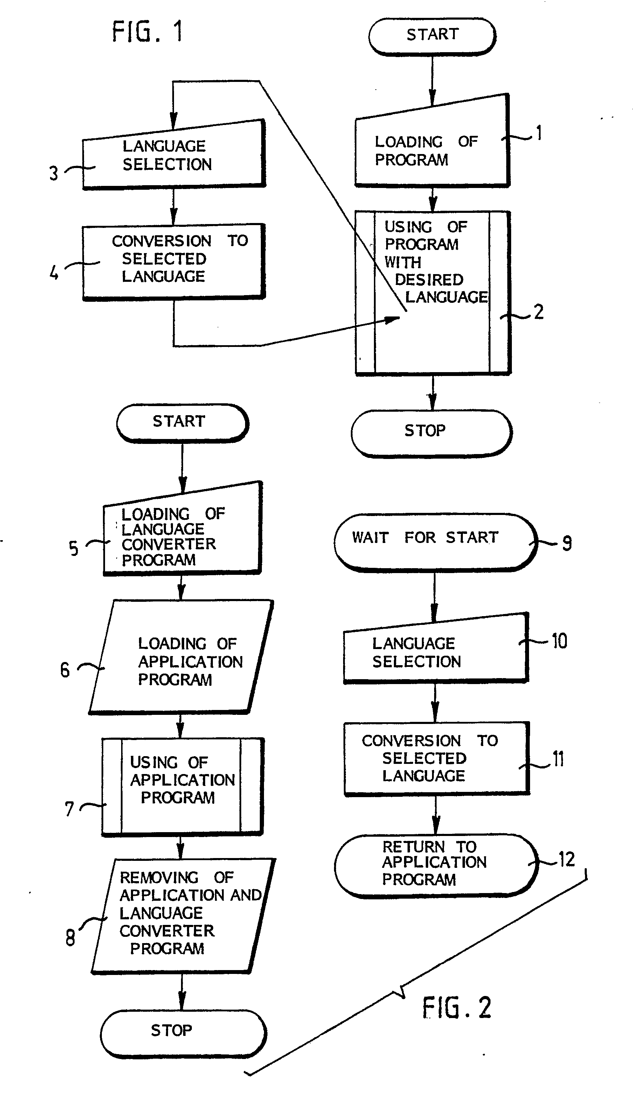

Figure 1 shows an embodiment of the invention in cases where files performing language conversion are called from under the control of the software in use. This application utilizes an add-in program operating within the software through an external interface, or a program module forming an integral part of the software.

An application program, which may be the standard version of the program, is loaded in block 1. In block 2 the program is used with the desired language so that if the user does not want to use the standard language (such as English), he can select another language from a menu, for instance, and is returned to the use of the program through block 4 so that the conversion files loaded in block 4 replace or complete at least part of the user interface utilized by the software. If the interface has changed completely, the language has also changed on all levels; if desired, even the names of the macro commands and calculation functions used by the program can be converted to another language format. It is likewise possible to provide program versions converted to a less extent, for instance, by converting the menus while leaving the other communications and commands unchanged. Amongst these alternative versions, the user can select the version best suited for him.

The conversion files can be resource files, in this particular case text files in which all the communications and texts used by the software are located, whereby the conversion of the program according to the invention and the updating of the conversion from one program version to another is easiest to perform. Alternatively, the texts to be converted can be located in a decentralized manner in the different program blocks, whereby the language conversion is equally possible whereas the updating from one software version to another is more difficult. As to the resource files, it is further to be noted that they facilitate parallel use of several languages in one and the same program, whereby the language conversion is carried out instantaneously by pressing a key ("hotkey"). This is an advantage not only when performing the conversion but also when learning the use of the program.

One practical example cf a well-functioning application of language conversion is the spreadsheet program Lotus 123 (registered trademarks), for which the Applicant has developed a user interface changer in the form of a language converter both for the version 2.01 and the version 3.0. The language converter program developed for the earlier version, in which the texts are decentralized in the different program blocks in a conventional way, deviates to some extent from the language converter program developed for the new version 3.0, which uses resource files; however, the application of the method to programs of different types does not involve any technical problems.

Figure 2 shows an alternative method in which the language conversion is carried out according to the invention by means of a background program (TSR). In this particular case, the TSR program performing the language conversion is first loaded in block 5, whereafter the program remains at least partly as a RAM resident background program ready for the start-up command (block 9). Thereafter the application program itself is loaded (block 6) and used (block 7).

During operation the language conversion is carried out at an arbitrary moment by loading the TSR program in block 9 and by selecting the TSR program of the language in block 10, whereafter the program converts the language of the application program to the desired language in block 11. Return to the application and block 7 takes place through block 12. When the processing is to be ended, the application program is quitted in a normal way, simultaneously removing the language conversion program in block 8. The operation of this embodiment is similar to that shown in Figure 1; the only difference is the type of the program performing the language conversion.

As is obvious to one skilled in the art, the different embodiments of the invention are not limited to the examples described above, but can vary within the scope of the attached claims.

**Claims**

1. A method of loading and/or replacing at least one file in a computer software, **characterized** in that the files are called from under the control of the used software or when loading it in a manner known per se so that the loaded file replaces or completes at least part of the user interface used by the software.

2. A method according to claim 1, **characterized** in that the file to be loaded is located as a background program (TSR) operating simultaneously with the software.

3. A method according to claim 1, **characterized** in that the file to be loaded is located as an add-in program operating within the software.

4. A method according to claim 1, **characterized** in that the file to be loaded is located within the software as its permanent program module.

5. A method according to any of the claims 1 to 4, **characterized** in that the file to be loaded is a character based text file.

6. A method according to any of the claims 1 to 4, **characterized** in that the file to be loaded is a description file for a graphic user interface.

7. A method according to any of the claims 1 to 6, **characterized** in that the file to be loaded replaces an original file in the software.

8. A method according to any of the claims 1 to 6, **characterized** in that the file to be loaded is located in parallel with the corresponding file of the software for alternative use.

FIG. 1

START

3 — LANGUAGE SELECTION

4 — CONVERSION TO SELECTED LANGUAGE

1 — LOADING OF PROGRAM

2 — USING OF PROGRAM WITH DESIRED LANGUAGE

STOP

START

5 — LOADING OF LANGUAGE CONVERTER PROGRAM

6 — LOADING OF APPLICATION PROGRAM

7 — USING OF APPLICATION PROGRAM

8 — REMOVING OF APPLICATION AND LANGUAGE CONVERTER PROGRAM

STOP

9 — WAIT FOR START

10 — LANGUAGE SELECTION

11 — CONVERSION TO SELECTED LANGUAGE

12 — RETURN TO APPLICATION PROGRAM

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 333 612 (IBM) <br> * Column 2, line 46 - column 3, line 6; column 7, lines 10-27; column 8, lines 11-40 * <br> --- | 1,5,7,8 | G 06 F 9/44 <br> G 06 F 9/445 |
| A | EP-A-0 335 139 (IBM) <br> * Abstract * <br> --- | 1,4,5,7 | |
| A | EP-A-0 209 693 (IBM) <br> * Abstract; figure 1 * <br> ----- | 1,5,7 | |
| | | | **TECHNICAL FIELDS SEARCHED (Int. Cl.5)** <br><br> G 06 F |

The present search report has been drawn up for all claims

| Place of search | Date of completion of the search | Examiner |
|---|---|---|
| THE HAGUE | 05-07-1990 | WILTINK J.G. |

EPO FORM 1503 03.82 (P0401)